Europäisches Patentamt

European Patent Office

Office européen des brevets

(19)

(11)  EP 1 243 894 A1

(12)  **EUROPEAN PATENT APPLICATION**

(43) Date of publication:
    **25.09.2002 Bulletin 2002/39**

(51) Int Cl.⁷: **G01B 11/25**

(21) Application number: **02100222.5**

(22) Date of filing: **05.03.2002**

(84) Designated Contracting States:
    **AT BE CH CY DE DK ES FI FR GB GR IE IT LI LU
    MC NL PT SE TR**
    Designated Extension States:
    **AL LT LV MK RO SI**

(30) Priority: **20.03.2001 US 812511**

(71) Applicant: **Ford Global Technologies, Inc.**
    **Dearborn, Michigan 48126 (US)**

(72) Inventors:
    • **CHEN, Fang**
      **48307, ROCHESTER HILLS (US)**
    • **RANKIN, James, Stewart II**
      **48374, NOVI (US)**

    • **PARADIS, Kevin, R.**
      **48154, LIVONIA (US)**
    • **SONG, Mumin**
      **48105, ANN ARBOR (US)**
    • **MacNEILLE, Perry, Robinson**
      **48076, LATHRUP VILLAGE (US)**
    • **STEWART, Paul, Joseph**
      **48108, ANN ARBOR (US)**
    • **CHEN, Yifan**
      **48108, ANN ARBOR (US)**

(74) Representative: **Messulam, Alec Moses et al**
    **A. Messulam & Co. Ltd.,**
    **43-45 High Road**
    **Bushey Heath, Bushey, Herts WD23 1EE (GB)**

(54)  **A range-image-based method and system for automatic sensor planning**

(57)    A system 10 for measuring one or more dimensions of a physical part 18 includes a fringe generator 14 for projecting a fringe pattern of light onto a surface of the physical part 18 to be measured. The system 10 includes a sensor 12 for capturing images of the fringe pattern on the surface. The sensor 12 and the fringe generator 14 are located at different positions. The fringe generator 14 and the sensor 12 are each in communication with a computer 16 to determine whether each of the fringe generator 14 and the sensor 12 have line-of-sight visibility to the surface to be measured.

FIG. 1

EP 1 243 894 A1

**Description**

This invention relates to an automatic sensor planning system and method and more particularly to a range-image based automated sensor planning system and method to assist in accurately determining the surface geometry of a part.

Part inspection is an important step in manufacturing and many part inspection techniques are known. Recently, automated part dimensional inspection techniques have been developed to solve some of the problems that are present in traditional approaches, including accuracy and speed. An essential part of every automated inspection system is finding suitable configurations for the sensors or sensor planning so that the inspection tasks can be satisfactorily performed.

One prior known system proposed an automated dimensional inspection environment for manufactured parts using a Coordinate Measuring Machine (CMM). This system utilized CAD databases to generate CMM sampling plans for inspecting or analyzing the surface of the part. This CMM method was accurate, but extremely time consuming as it employed a point-by-point sampling system. The method became even more time consuming when the system was used to measure the surface of large parts. Other traditional point-scan devices, such as line-scanning devices and laser scanners, suffer from the same problems. Moreover, this method could only be utilized when a CAD model was available.

Active optical scanning methods are also known for part surface inspection. These methods allow for faster dimensional inspection of a part. One current active optical sensing method that has been successfully employed for various applications is the structured light method, which obtains 3-D coordinates by projecting specific light patterns on the surface of the object to be measured. However, sensor configurations, such as position, orientation, and optical settings, are critical to the structured light method. These configurations effect measuring accuracy and efficiency directly. In most prior structured light applications, sensor configuration planning was based on human operator experience, which resulted in considerable human error and thus, low efficiency. These methods are also typically not as accurate as the point-scan methods, which are discussed above.

Currently, sensor planning in a computer vision environment attempts to understand and quantify the relationship between the object to be viewed and the sensor observing it in a model-based task directed way. Recent advancements in 3-D optical sensor technologies now allow for more efficient part inspection. However, these sensor technologies are still too inefficient for use in most commercial production processes.

Presently, the most widely used 3-D method for sensor planning for part inspection is the "click and check" method. In the click and check method, the user is presented with a graphical display of the object to be measured based on a CAD model. Based on the CAD model, a file is written and then translated into a file that a CMM/robotics off-line programming package can read. The programming package, such as SILMA or Robcad is used to develop a program that will move the CMM/robot along the predefined path. By using the off-line programming package, a user/operator must imagine the 3-D object in space and then insert locations and view directions for the sensor by clicking the points in the graphical display. Having developed a set of sensor locations, each location must be verified to insure that it was acceptable and the entire surface is covered. Usually, this is done using a physical part and a CMM or a robot.

The click and check method also provides a technique for connecting the locations in order to form a sensor path. As is known, other technology is employed to control how the CMM or the robot moves the area scanner between locations without collisions or kinematic inversion problems. The click and check method is extremely time consuming, difficult to perform, and also unreliable. Moreover, because it requires human intervention and selection of the view direction of the scanner for each location, it is susceptible to significant error and, thus, inefficiency. Additionally, this method can only be utilized when a CAD model of the surface to be measured is available.

It is therefore an object of the present invention to provide a sensor planning system and method that automatically determines sensor locations without the need of a CAD model.

According to a first aspect of the invention there is provided a system for measuring at least one dimension of a physical part characterised in that the system comprises a fringe generator for projecting a fringe pattern of light onto a surface of the physical part to be measured, a sensor for capturing images of said fringe pattern on said surface, said sensor being located at a different position from said fringe generator, a computer in communication with both said fringe generator and said sensor to determine whether each of said fringe generator and said sensor have line-of-sight visibility to said surface to be measured.

Said fringe generator may include a light source directed at said surface and a spatial light modulator disposed between said light source and said surface.

The system may further comprise a phase shifter for generating incremental phase shifts of said fringe pattern on said surface, which incremental phase shifts are captured as images by said sensor.

Said phase shifter may be digitally controlled by said computer.

Said computer may determine a combined image based on said captured images of said incremental phase shifts.

Said combined image may be determined ac-

cording to the equation :

$$I = \arctan ((I_4 - I_2) / (I_1 - I_3))$$

According to a second aspect of the invention there is provided a method for providing automatic sensor planning to measure the shape and dimension of a physical part, comprising projecting a fringe pattern on a surface of the physical part, projecting an incrementally phase shifted fringe pattern on said surface and determining based on said projected fringe pattern and said projected incrementally phase shifted fringe pattern whether a sensor and a fringe generator have a clear line-of-sight to said surface.

A determination of whether the sensor and said fringe generator have a clear line-of-sight may be based on an image of the projected fringe pattern and said projected incrementally phase shifted fringe pattern.

The method may further comprise computing a combined image resulting from an image of the projected fringe pattern and an image of the projected incrementally phase shifted pattern.

The method may further comprise scanning said combined image to determine whether the sensor and the fringe generator have a clear line-of-sight, a poor line-of-sight, or no line-of-sight.

The method may further comprise adjusting a position of said sensor if any bars in said combined image are not continuous.

The method may further comprise adjusting a position of said fringe generator if a significant spacing exists between any two adjacent bars in said combined image.

The method may further comprise adjusting the fringe generator so that a surface area with poor line-of-sight is exposed to more tightly spaced fringe bars relative to a surface area with clear line-of-sight.

The method may further comprise capturing an image of said projected fringe pattern and capturing an image of said projected incrementally phase shifted fringe pattern.

The method may further comprise creating a ROPD diagram corresponding to said phase shift.

According to a third aspect of the invention there is provided method for determining whether a sensor and a fringe generator have line-of-sight visibility to an object surface, comprising inputting phase shift images to a computer, computing a combined image based on said input phase shift images, scanning said combined image and determining whether any occlusions result in no line-of-sight or poor line-of-sight from either the sensor or the fringe generator to the object surface.

The method for determining whether a sensor and a fringe generator have line-of-sight visibility may further comprise computing an ROPD diagram for any of a set of scan lines chosen for said phase shift images.

The method for determining whether a sensor and a fringe generator have line-of-sight visibility may further comprise determining whether any bars in said combined image are not continuous and determining whether any significant variation of spacing exists between any bars in said combined image.

The method for determining whether a sensor and a fringe generator have line-of-sight visibility may further comprise determining whether any peaks are missing in said ROPD diagrams and adjusting the location of the sensor if any peaks are missing in said ROPD diagram.

The method for determining whether a sensor and a fringe generator have line-of-sight visibility may further comprise determining whether there are any adjacent pairs of peaks with excessively small interval between them and adjusting the location of the sensor if there are any adjacent pairs of peaks with an excessively small interval between them.

The method for determining whether a sensor and a fringe generator have line-of-sight visibility may further comprise determining whether there are any adjacent pairs of peaks with an excessively large interval therebetween and adjusting the location of the fringe generator if any pairs of peaks exist with an excessively large interval therebetween.

The method for determining whether a sensor and a fringe generator have line-of-sight visibility may further comprise determining whether there are any adjacent pairs of peaks with an excessively large interval therebetween and decreasing the interval among those fringes that are projected onto the area where peaks with an excessively large interval exist.

The method for determining whether a sensor and a fringe generator have line-of-sight visibility may further comprise determining whether any peaks are missing in said ROPD diagram and adjusting the location of both the sensor and the fringe generator if any peaks are missing in said ROPD diagram, if any significant variation of spacing exists between any bars of said combined image and if any bar in said combined image is not continuous.

The method for determining whether a sensor and a fringe generator have line-of-sight visibility may further comprise determining whether any peaks are missing in said ROPD diagram and adjusting the spacing of the fringes so that an area with poor line-of-sight from the fringe generator is covered by more tightly spaced fringe bars.

The invention will now be described by way of example with reference to the accompanying drawing of which:-

Figure 1 is a schematic view illustrating the components of a sensor system in accordance with a preferred embodiment of the present invention;

Figure 2a is a side view of a pyramid-shaped object that is used to exemplarily illustrate a preferred method in accordance with the present invention;

Figure 2b is a front view of the pyramid-shaped object showing Figure 2a;

Figures 3a through 3d illustrate exemplary fringe pattern images captured from the pyramid-shaped object of Figures 2a and 2b corresponding to phase shifts in accordance with a preferred embodiment of the present invention;

Figure 4 is an illustration of an image, which is a combination of the phase shift images of the pyramid-shaped object of Figures 3a through 3d in accordance with a preferred embodiment of the present invention;

Figures 5a through 5d illustrate exemplary fringe pattern images captured from a pyramid-shaped object where a fringe generator has visibility to the object surface but the sensor does not have visibility to a portion of the object surface in accordance with the present invention;

Figure 6 is an illustration of an image, which is a combination of the phase shift images of the pyramid-shaped object of the phase shift images of Figures 5a through 5d, in accordance with a preferred embodiment of the present invention;

Figures 7a through 7d illustrate exemplary fringe pattern images captured from a pyramid-shaped object where a sensor has visibility to the object surface, but the fringe generator does not have visibility to a portion of the object surface, in accordance with a preferred embodiment of the present invention;

Figure 8 is an illustration of an image which is a combination of the images of the pyramid-shaped object of the phase shift images of Figures 7a through 7d, in accordance with a preferred embodiment of the present invention; and

Figure 9 is a schematic flow chart illustrating the decision flow of an automatic sensor planning system in accordance with a preferred embodiment of the present invention.

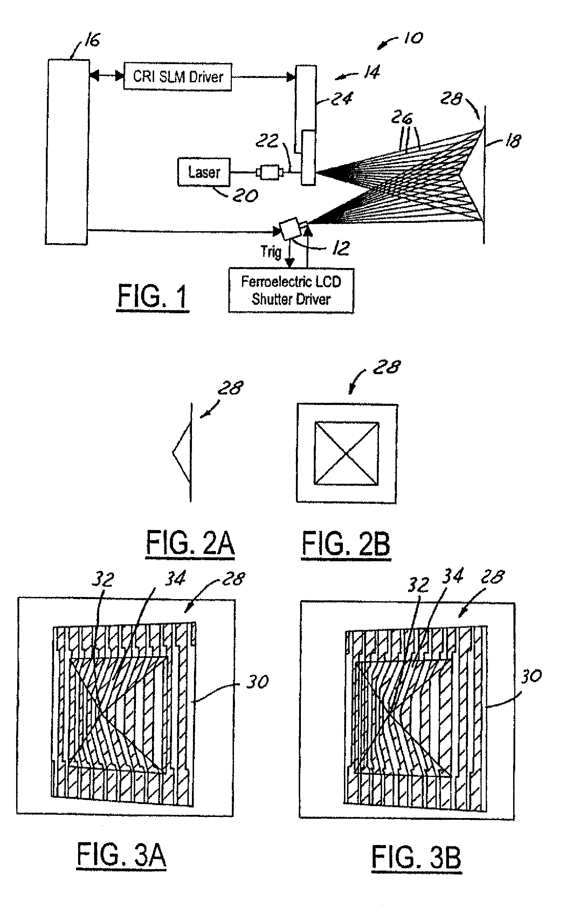

Referring now to Figure 1, which schematically illustrates a sensor system 10 in accordance with a preferred embodiment of the present invention. The sensor system 10 includes a sensor or camera 12 and a fringe generator 14, which are each in communication with a computer 16.
The camera 12 is preferably a digital camera that is in communication with a ferroelectric LCD shuttle driver, however, any commercially available camera may be utilized, in which case it may be necessary to scan and digitize the obtained images.
The fringe generator 14 is preferably a spatial light modulator ("SLM") that projects a fringe pattern of light onto a surface of an object 18 that is being inspected or measured.
In accordance with a preferred embodiment, the SLM system includes a laser 20, which emits a beam of light 22 through a liquid crystal spatial light modulator 24. The laser is preferably a YAG laser in communication with an objective lens however, any commercially available lens may be utilized.
The liquid crystal spatial light modulator 24 divides the beam of light into multiple beams 26 to create a fringe pattern on the surface of the object 18 to be inspected or measured. The liquid crystal spatial light modulator can be digitally controlled. This allows the computer to control how the beam of light is divided. For example, the computer can be programmed to control the spacing of the fringes.
The fringe generator 14 can be any of a variety of known fringe generation systems including the fringe generator disclosed in U.S. Patent No. 6,100,984.
The camera or sensor 12 captures grey-scaled images of the fringe pattern or patterns projected onto the surface of the object 18. Preferably, the sensor 12 and the fringe generator 14 are not located at the same position in order to ensure accuracy. Preferably, the fringe generator 14 generates a fringe pattern, comprised of vertical bars. The sensor 12 captures a photographic image of a grey-scaled image of these bars. The fringe pattern can obviously take on a variety of other configurations and patterns. However, vertical fringes are preferred in the preferred embodiment where the sensor and fringe generator are positioned relative to each other in a horizontal configuration.
In order to illustrate more clearly the present invention, a pyramid-shaped object is used to assist in explaining the characteristics of the fringe patterns under various circumstances related to the present invention.
Figures 2a and 2b are a side view and a front view respectively of the pyramid-shaped object 28, which is utilized to illustrate the operation of the disclosed method.
Referring now to Figures 3a through 3d, which illustrate several fringe pattern images captured from the exemplary pyramid-shaped object 28. The highest intensity is along the middle of a white bar and the lowest intensity is along the middle of a dark bar, generally indicated by the shaded portions. Normally, the two peak intensities of two neighbouring or adjacent bars represent a complete "phase", which is 360 degrees, and the intensity in-between is modulated and sinusoidal in nature.
As is known, an SLM can shift the position of these bars through a technique known as phase shifting.

A full phase shift, i.e. a 360-degree shift, means each bar is moved to the position of its left or right neighbour consistently.

Usually a fringe pattern generated from an SLM is a set of parallel and uniformly spaced light bands. Their projections onto an object may become non-parallel and vary in width due to the position, orientation, and shape of the object relative to the fringe generator and the sensor.

Figure 3a illustrates an image of an initial fringe pattern projected onto a pyramid-shaped object 28. Figure 3b illustrates an image of a fringe pattern that has been incrementally phase shifted 90 degrees from the fringe pattern shown in Figure 3a.

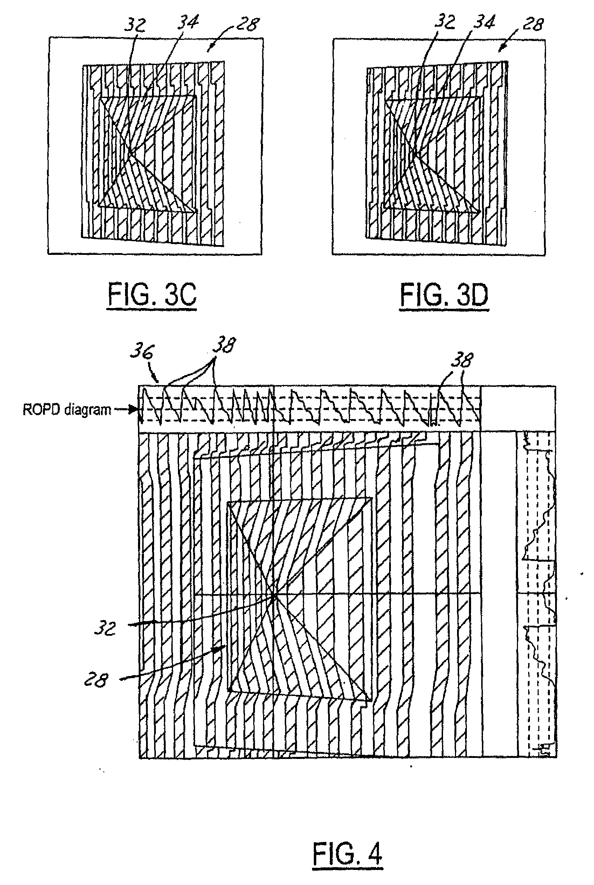

Figure 3c illustrates an image of a fringe pattern that has been incrementally phase shifted 90-degrees with respect to the fringe pattern shown in Figure 3b.

Figure 3d illustrates a 90 degree incremental phase shift with respect to the fringe pattern shown in Figure 3c.

As shown in Figure 3a, the right edge of the pyramid-shaped object 28 has a light bar 30, which slowly gets smaller in Figures 3b and 3c until it disappears in Figure 3d.

Similarly, in Figure 3a, the peak 32 of the pyramid is initially covered by a light bar 34, which gradually moves to the right during the successive phases, shown in Figures 3b, 3c, and 3d.

In general, individual incremental phase shift images like those shown in Figure 3 can be filtered for noise reduction and are further analyzed for conditions like specular reflection or holes in the part. If any specular reflection exists, proper remedies can be taken so that the specular reflection is avoided in the final results. If holes are detected, they are recognized and marked as regions with no valid shape information. These regions will, therefore, be ignored in the final analysis addressed in the disclosed method.

The particular process and method of detecting specular reflections and holes and the application of proper remedies is not critical. The disclosed system and process, therefore, assumes, without losing generality, that the images obtained from incremental phase shifts are free of noise, specular reflection, and holes.

The three 90 degree incremental phase shifts can be used together with the original one to compose a combined phase shift image using the following formula:

$$I = \arctan\left(\frac{I_4 - I_2}{I_1 - I_3}\right)$$

Where:

/ is the resulting phase shift value,

$I_1$, $I_2$, $I_3$, and $I_4$ are the respective intensities for any pixel under consideration for each of the phase shift images and in this case :-

$I_1$ is the intensity of the image shown in Figure 3a;

$I_2$ is the intensity of the image shown in Figure 3b;

$I_3$ is the intensity of the image shown in Figure 3c; and

$I_4$ is the intensity of the image shown in Figure 3d.

Applying the above formula to each pixel in the images shown in Figures 3a through 3d results in a combined phase shift image, which is the combination of Figures 3a through 3d, such as the one illustrated in Figure 4.

Based on this result, a so-called RODP diagram of the combined phase shift image can then be generated for any horizontal or vertical scan of the image.

The upper portion of Figure 4, as generally indicated by reference number 36, illustrates an example of such a RODP diagram. In Figure 4, the horizontal axis of the ROPD diagram represents the spacing of the bars and their vertical phase angles.

The vertical phase angle ranges from 0 to $2\Pi$ due to the sinusoidal nature of the intensity distribution. As shown in the combined phase shift image of Figure 4, each of the vertical bars is generally consistent from the top of the image to the bottom of the image. Further, the peaks 38 of each of the bars in the ROPD diagram does exist for any horizontal scan and is generally spaced with consistently varying intervals, indicating that there are no occlusions.

As discussed, the preferred sensor system 12 is used to inspect the surface of an object 18. As is known, each sensor 12 and each fringe generator 14 have a line-of-sight visibility, and thus visibility issues must be taken into account. The visibility issues fall into one of four categories.

In the first category, both the SLM 14 and the sensor 12 have a line-of-sight visibility to the object surface 18. This is the necessary condition for an image to be useful for measurement purposes.

In the second category, the SLM 14 has line-of-sight visibility to the object 18, but the sensor 12 does not have line-of-sight visibility.

In the third category, the sensor 12 has line-of-sight visibility, but the SLM 14 does not have line-of-sight visibility.

In the fourth category, neither the sensor 12 nor the SLM 14 has line-of-sight visibility.

In accordance with the preferred system 10, the computer 16 determines which of the four categories the sensor 12 and the SLM 14 fall into.

In the first category, where both the sensor 12 and the SLM 14 have line-of-sight visibility, then all the bars in the phase shift image should be continuous, i.e. no broken bars. Another characteristic of the first category is that in the ROPD diagram, there is a peak corresponding to each of the bars in the image regardless of the horizontal scan line position. The properties of an image that falls into the first category are illustrated in Figures 3a through 3d and Figure 4.

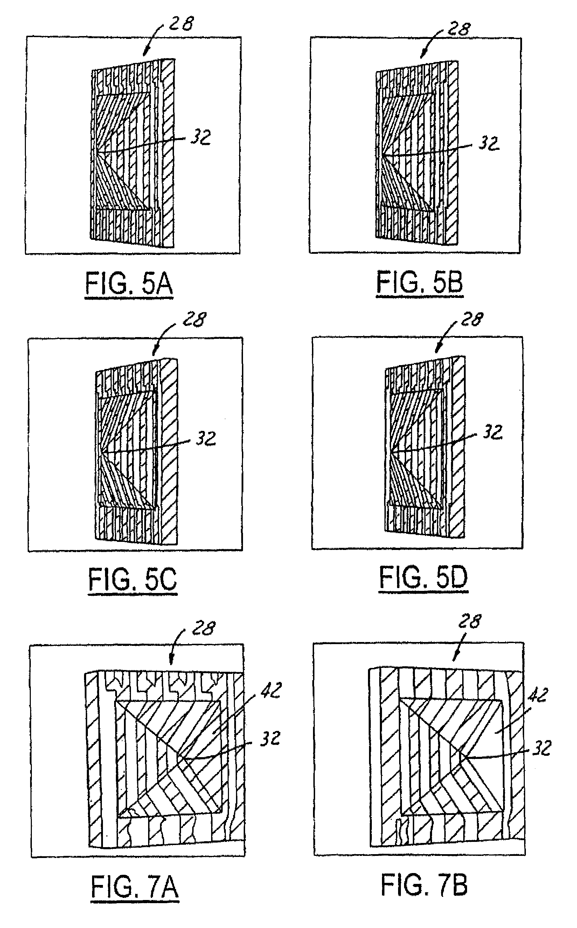

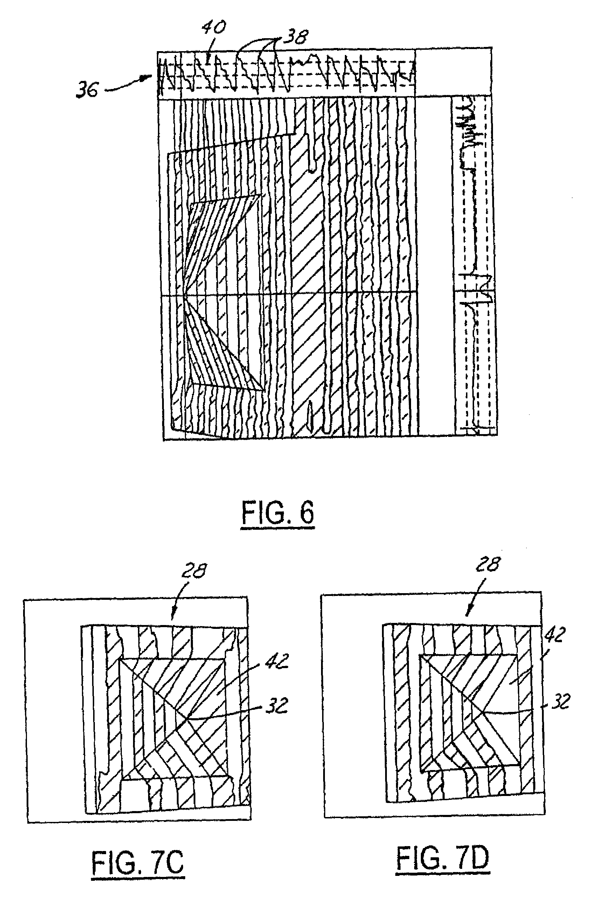

In the second category, where the SLM 14 has line-of-sight visibility, but the sensor 12 does not have clear line-of-sight visibility, not all the bars in the phase shift image are continuous. Another characteristic of a second category image is that there will be some missing peaks in the ROPD diagram if the horizontal scan line passes the region where the sensor 12 does not have clear line-of-sight visibility. This is illustrated in Figures 5 and 6 and as shown in Figures 5a through 5d, fringe patterns are projected onto the pyramid-shaped object 28 in incremental 90 degree phase shifts. However, as shown, the angle of incidence of the sensor 12 is such that the sensor 12 does not have clear line-of-sight to the entire surface.

As shown, the sensor 12 is not able to view the left most side of the pyramid. Figure 6 illustrates a combined phase shift image of the images of Figures 5a through 5d. As shown, not all the bars in Figure 6 are continuous. Further, some of the peaks in the ROPD diagram 36 are missing, as generally indicated by reference number 40.

The second category definition may be extended to include cases in which the sensor does have the absolute line-of-sight, but is on the verge of losing it. An image obtained in such a case is valid in theory but difficult to use in practice because a surface area for which the line-of-sight condition is almost violated usually occupies only a small area in the overall image. The small area results in insufficient pixel resolution to represent this area.

Such a condition is reflected in an ROPD diagram as "pinched up peaks of intensity" and thus can be detected.

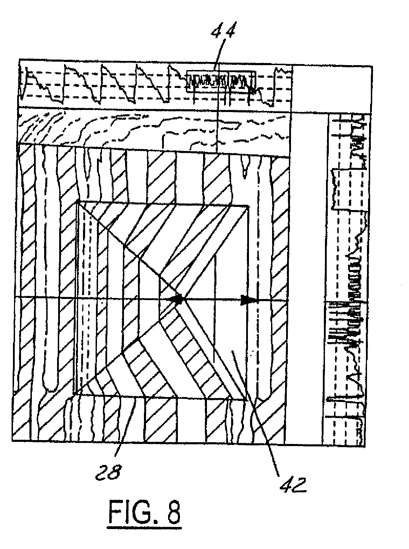

In the third category, where the sensor 12 has line-of-sight visibility, but the SLM 14 does not have line-of-sight visibility, all the bars in the phase shift image are continuous. However, in this image, an occluded area will exhibit a significant variation of spacing between the bars. Another characteristic of a third category image is that in the ROPD diagram, there is excessively large spacing between peaks. Figures 7 and 8 illustrate a third category scenario. As shown in Figures 7a through 7d, fringe patterns are projected onto the pyramid-shaped object 28 in incremental 90 degree phase shifts. As shown, the sensor 12 has line-of-sight visibility to the entire surface of the object 28. However, the SLM 14 does not have line-of-sight visibility as the surface of the object 28 does not have continuous vertical bars on the left side of the pyramid, as generally indicated by reference number 42.

As shown in Figure 8, there are no missing peaks in the ROPD diagram 36. However, the spacing between the peaks in the occluded area is very large, forming a flat plateau with an increased intensity between the lowest and the highest intensity values, as generally indicated by the boxed area 44.

The third category definition may be extended to include cases in which the SLM is on the verge of losing the line-of-sight visibility. An image obtained in such a case is valid in theory but of a poor quality in practice because a surface area that barely satisfies the line-of-sight condition will exhibit a narrow range of light intensity. The lack of light intensity resolution to represent the area results in deficiency of measurement accuracy and thus needs to be avoided. Such a condition corresponds to "flatten peaks" in the ROPD diagram and thus can be detected.

In the fourth category, where neither the SLM 14 or the sensor 12 has line-of-sight visibility, the characteristics of both the second category and the third category may exist.

It will be understood in Figures 3, 5 and 7, each pair of vertical bars (one in black and one in white) in an image represents a complete phase of the fringe pattern, for which the lowest intensity is located somewhere along the middle of the black bar and the highest intensity along the middle of the white bar. The intensity in-between the peaks, that is to say, two adjacent highest intensity locations is, in fact, of sinusoidal natural and varies continuously. As will be understood, the figures illustrate black and white bars which are representative of a grey-scaled fringe pattern, which cannot be reproduced due to a lack of shading resolution. Moreover, the continuously varying nature of intensity will be obvious to those skilled in the art.

A similar simplification is shown in Figures 4, 6, and 8. As will be understood, the lowest intensity of any image in those figures should be the right edge of a black bar and the highest intensity should be the left edge of its right neighbour (a white bar). The actual intensity in-between is also sinusoidal in nature and will also be obvious to those skilled in the art.

The representations shown in Figures 3 to 8 are preferably of digital images or of images that can be converted into digital images. Further, the light intensity for any pixel in a digital image can be queried for various analysis purposes.

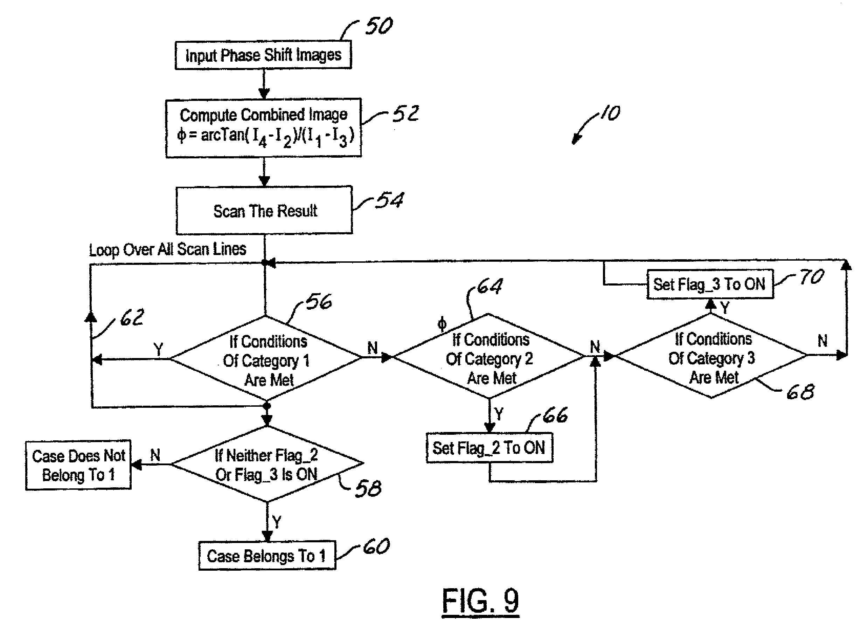

Figure 9 schematically illustrates the operation of the preferred system for determining if an object under inspection is free of occlusions for a given sensor location and for a given fringe generator location.

The characteristics of the four categories described in detail above can be used to assist in such a procedure. In accordance with the preferred sensor system 10, the phase shift images are preferably input into the computer 16, as generally indicated by reference number 50.

The combined image is then computed according to the equation:

$$I = \arctan (I4-I2)/ (I1-I3)$$

and is then generated, as generally indicated by reference number 52.

The resultant combined image is then scanned, as generally indicated by reference number 54. The combined image is preferably scanned bar by bar. Thus, the combined image is usually scanned horizontally.

The scanned image is analyzed to determine whether both the sensor 12 and the SLM 14 have line-of-sight visibility to a given scan line, as generally indicated by reference number 56.

If the scan line meets the requirements of the first category then the next bar in the image is scanned, as generally indicated by reference number 62. If, however, when the scanned image is analyzed at reference number 56, it does not meet the conditions of the first category, it is analyzed to determine whether it meets the conditions of the second category, as generally indicated by reference number 64.

If the image meets the conditions of the second category then the second category flag is set to on, as is generally indicated by reference number 66. After the second category flag is checked, the image is scanned to determine whether it meets the conditions of the third category, as generally indicated by reference number 68. If the scanned image meets the conditions of the third category then the third category flag is set to on, as is generally indicated by reference number 70.

If, however, the conditions of the second category are not met during image analysis at reference number 64 the second category flag is not set and the image is analyzed at reference number 68 to determine whether it meets the conditions of the third category. If the image does not meet the conditions of the third category, the third category flag is not set and the next portion of the image is checked to determine whether it meets the conditions of the first category at reference number 56.

Once the entire image has been scanned then the computer 16 checks to determine whether either the second category flag or the third category flag has been set to on at reference number 58. If not, then the image belongs to the first category, as generally indicated by reference number 60. If either category flag has been set to on, at reference number 58, then the image is categorized in a category other than the first category, as generally indicated by reference number 72, and depending upon what category flag has been checked.

If the current sensor location does not belong to the first category, corrective steps can be taken to move the sensor to a first category location. Specifically, if the image belongs to the second category, then the position of the sensor 12 needs to be adjusted. A correct direction can be calculated based on the concept of search in the direction of the quickest reappearance of the missing peaks.

The sensor 12 is then moved along that direction for a small step and the result is then analyzed. Multiple directions may have to be considered if the direction of the quickest reappearance leads to conditions of the third category. This process repeats until none of the conditions of the second category are met and none of the conditions of the third category are created either in the course of doing so. The final result is a good location of the sensor 12 that satisfies the conditions of the first category.

If the image belongs to the third category, then the position of the SLM 14 needs to be adjusted. Similarly, a correctional direction can be determined in a way the plateau in the ROPD diagram disappears the quickest. The SLM 14 is then moved along that direction for a small step. This process repeats until none of the conditions of the third category are met. Multiple directions may have to be considered if the direction of the quickest disappearing plateau leads to conditions of the second category. The final result is a good location of the SLM that satisfies the conditions of the first category.

If the image belongs to the case of the third category in which the fringe generator is on the verge of losing the line-of-sight visibility, such as when the gradient of the object shape along the line-of-sight direction from the fringe generator is exceedingly large, an alternative to moving the fringe generator to a better position can be utilized. This alternative includes adjusting the spacing of the fringes as they come out of the fringe generator so that the high gradient area on the object will be exposed to more tightly spaced fringes to compensate for the lack of light intensity variation problem. This can be achieved either by adjusting the existing fringes or by projecting additional fringes only onto the area in question, in which case all the equations established for the general purpose of computing the combined phase shift image apply automatically.

Sometimes, iterations may not yield a feasible location for either the sensor 12 or the SLM 14. If this situation occurs, the area under inspection needs to be split into smaller regions. This partition process continues until, for each region, the sensor scenario belongs to the first category.

The sensor system 10 can be used in a variety of applications. Most importantly, it can be used to assist in measuring physical parts with no matching CAD models available. This is a frequently encountered task that occurs in the reverse engineering of a commercial product of interest. The sensor system can also be used to assist in die development, such as by "fingerprinting" or measuring the "soft" or trial die for the "hard" or production die.

This allows for the capture of knowledge and work, which is used to create the soft die. Further, the system 10 can be used to scan a panel taken out of a die. The scanned information is then compared to the CAD model. A colour map visualizing any discrepancy between the produced part and its intended shape can be created to assist a sophisticated die maker in interpreting and analyzing the quality of the part. Additionally, with the process, a CAD model of a part can be shown on the corresponding physical part to perform part verification.

The sensor system 10 can also be utilized to capture production problems. For example, the headlights and the headlight openings of a vehicle could be scanned to determine which of the two parts is causing interference so that the production problems can be corrected. This allows parts to be tested individually as they are coming down the line instead of waiting for a statistically significant sampling size, as is currently necessary. Moreover, the disclosed system 10 can be used to "fingerprint" a hard tool as well when it is originally created. This is important because as a hard tool is used, its shape can be changed.

Thus, if a hard tool breaks later into its life, the fingerprint of the part at the time it broke will most likely not be the same as the fingerprint when the hard tool was originally created. This process will also allow the life of a hard tool to be predicted.

Another application for the disclosed system 10 is with a vendor or supplier company of parts. If the vendor has an analytical CAD model of the part or parts being made, periodic scan can be performed on the part during development. This process could reveal that although the part does not fall within the tolerances specified by the manufacturer, it works and does not need to be modified any further.

The system 10 could also be used to scan a vehicle wheel to determine if it has five nuts located thereon or not. The above applications are only illustrative and the disclosed system can be used in a variety of other applications as will be understood by one of skill in the art.

While the invention has been described in terms of preferred embodiments, it will be understood, of course, that the invention is not limited thereto since modifications may be made by those skilled in the art, particularly in light of the foregoing teachings.

## Claims

1. A system (10) for measuring at least one dimension of a physical part (18) **characterised in that** the system comprises a fringe generator (14) for projecting a fringe pattern of light onto a surface of the physical part (18) to be measured, a sensor (12) for capturing images of said fringe pattern on said surface, said sensor (12) being located at a different position from said fringe generator (14), a computer (16) in communication with both said fringe generator (14) and said sensor (12) to determine whether each of said fringe generator (14) and said sensor (12) have line-of-sight visibility to said surface to be measured.

2. A system as claimed in claim 1 wherein said fringe generator includes a light source (20) directed at said surface and a spatial light modulator (24) disposed between said light source (20) and said surface.

3. A system as claimed in claim 1 or in claim 2 wherein the system further comprises a phase shifter for generating incremental phase shifts of said fringe pattern on said surface, which incremental phase shifts are captured as images by said sensor (12).

4. A system as claimed in claim 3, wherein said phase shifter is digitally controlled by said computer (16).

5. A system as claimed in claim 3 or in claim 4 wherein said computer (16) determines a combined image based on said captured images of said incremental phase shifts.

6. A system as claimed in claim 5 wherein said combined image is determined according to the equation:

$$I = \arctan((I_4 - I_2) / (I_1 - I_3))$$

7. A method for providing automatic sensor planning to measure the shape and dimension of a physical part (18), **characterised in that** the method comprises projecting a fringe pattern on a surface of the physical part (18), projecting an incrementally phase shifted fringe pattern on said surface and determining based on said projected fringe pattern and said projected incrementally phase shifted fringe pattern whether a sensor (12) and a fringe generator (14) have a clear line-of-sight to said surface.

8. A method as claimed in claim 7 wherein a determination of whether the sensor (12) and said fringe generator (14) have a clear line-of-sight is based on an image of the projected fringe pattern and said projected incrementally phase shifted fringe pattern.

9. A method as claimed in claim 7 or in claim 8 wherein the method further comprises computing a combined image resulting from an image of the projected fringe pattern and an image of the projected incrementally phase shifted pattern.

**10.** A method as claimed in claim 9 wherein the method further comprises scanning said combined image to determine whether the sensor (12) and the fringe generator (14) have a clear line-of-sight, a poor line-of-sight, or no line-of-sight.

**11.** A method as claimed in claim 9 or in claim 10 wherein the method further comprises adjusting a position of said sensor (12) if any bars in said combined image are not continuous.

**12.** A method as claimed in claim 9 or 10 wherein the method further comprises adjusting a position of said fringe generator (14) if a significant spacing exists between any two adjacent bars in said combined image.

**13.** A method as claimed in claim 10 the method further comprising adjusting said fringe generator (14) so that a surface area with poor line-of-sight is exposed to more tightly spaced fringe bars relative to a surface area with clear line-of-sight.

**14.** A method as claimed in any of claims 7 to 13 wherein the method further comprises capturing an image of said projected fringe pattern and capturing an image of said projected incrementally phase shifted fringe pattern.

FIG. 1

FIG. 2A          FIG. 2B

FIG. 3A          FIG. 3B

FIG. 3C

FIG. 3D

ROPD diagram →

FIG. 4

EP 1 243 894 A1

FIG. 5A

FIG. 5B

FIG. 5C

FIG. 5D

FIG. 7A

FIG. 7B

12

FIG. 6

FIG. 7C

FIG. 7D

FIG. 8

FIG. 9

**European Patent Office**

## EUROPEAN SEARCH REPORT

Application Number

EP 02 10 0222

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 89 09378 A (KREON INGENIERIE MARKETING) 5 October 1989 (1989-10-05) * page 10, line 23 - page 23, line 18; figures 1-5 * | 1,7, 10-12 | G01B11/25 |
| A | PATENT ABSTRACTS OF JAPAN & JP 2000 146534 A (NIPPON ELECTRIC CORP.), 26 May 2000 (2000-05-26) * abstract * | 1,2,7 | |
| A | EP 0 453 977 A (CARL ZEISS-STIFTUNG HANDELND ALS CARL ZEISS) 30 October 1991 (1991-10-30) * the whole document * * figures 1B,2 * | 1-4,7,8, 14 | |
| A | DE 41 30 237 A (FA. CARL ZEISS) 18 March 1993 (1993-03-18) * the whole ducument * * figures * | 1-5,7 | |
| A | FR 2 682 473 A (KALTENBACH & VOIGT GMBH) 16 April 1993 (1993-04-16) * the whole document * * figures 1-6 * | 1,7 | TECHNICAL FIELDS SEARCHED (Int.Cl.7) G01B |

The present search report has been drawn up for all claims

| Place of search | Date of completion of the search | Examiner |
|---|---|---|
| THE HAGUE | 11 July 2002 | Visser, F |

**ANNEX TO THE EUROPEAN SEARCH REPORT
ON EUROPEAN PATENT APPLICATION NO.** EP 02 10 0222

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2002

| Patent document cited in search report | | | Publication date | Patent family member(s) | | Publication date |
|---|---|---|---|---|---|---|
| WO 8909378 | A | | 05-10-1989 | FR | 2629198 A1 | 29-09-1989 |
| | | | | CA | 1328913 A1 | 26-04-1994 |
| | | | | EP | 0348247 A1 | 27-12-1989 |
| | | | | FR | 2629225 A1 | 29-09-1989 |
| | | | | FR | 2629233 A1 | 29-09-1989 |
| | | | | WO | 8909378 A1 | 05-10-1989 |
| JP 2000146534 | A | | 26-05-2000 | NONE | | |
| EP 453977 | A | | 30-10-1991 | DE | 4013309 A1 | 31-10-1991 |
| | | | | DE | 59108994 D1 | 02-07-1998 |
| | | | | EP | 0453977 A2 | 30-10-1991 |
| | | | | JP | 3065374 B2 | 17-07-2000 |
| | | | | JP | 4249752 A | 04-09-1992 |
| | | | | US | 5311599 A | 10-05-1994 |
| DE 4130237 | A | | 18-03-1993 | DE | 4130237 A1 | 18-03-1993 |
| | | | | JP | 5209728 A | 20-08-1993 |
| | | | | US | 5307151 A | 26-04-1994 |
| FR 2682473 | A | | 16-04-1993 | DE | 4134117 A1 | 22-04-1993 |
| | | | | FR | 2682473 A1 | 16-04-1993 |
| | | | | JP | 2093330 C | 18-09-1996 |
| | | | | JP | 6123610 A | 06-05-1994 |
| | | | | JP | 7117389 B | 18-12-1995 |
| | | | | US | 5339154 A | 16-08-1994 |

EPO FORM P0459

For more details about this annex : see Official Journal of the European Patent Office, No. 12/82